# EUROPEAN PATENT SPECIFICATION

(11) **EP 2 022 454 B1**
(45) Date of publication and mention of the grant of the patent: **18.09.2013**
(21) Application number: 07765853.2
(22) Date of filing: 09.05.2007
(51) Int. Cl.: A61G 5/02, B62M 1/14

(54) **WHEELCHAIR**
ROLLSTUHL
CHAISE ROULANTE

(30) Priority: 09.05.2006 ES 200601280
(43) Date of publication of application: 11.02.2009
(73) Proprietor: Hefestos Mechanics S.R.L., 50720 La Cartuja Baja (Zaragoza) (ES)
(72) Inventor: SANCHEZ LOPEZ, David, 50004 Zaragoza (ES)
(74) Representative: Carvajal y Urquijo, Isabel
(86) International application number: PCT/ES2007/000270
(87) International publication number: WO 2007/128855

(56) References cited:
- WO-A1-93/01787
- GB-A- 2 308 342
- US-A- 5 509 673
- US-A- 5 762 350
- US-A- 5 762 350
- US-A1- 2004 051 272

## Description

This invention pertains to a wheel chair, i.e. a chair that is used either on a temporary or a permanent basis by people who cannot walk and who therefore require a chair to move from one place to another.

The purpose of the invention is to provide a chair with a new means by which it can be moved by the user, significantly facilitating the process so that it is more comfortable and requires less physical effort

### Background of the Invention

As is well known, the classic wheelchair is basically built from a chair, that is with a back, a footrest, arm supports and a pair of handles in the back, that allow it to be pushed by a person other than the user. This structure rests on a pair of large diameter driving wheels in the rear and a pair of self-directional wheels of a considerably smaller diameter in the front.

To allow the chair to be moved by the user, the rear wheels are each provided with rings that can be used as grips so that the user moves the chair manually by moving the rings in intermittent pushing movements.

This conventional solution has barely evolved over time, remains in use today, and presents a series of problems, not the least of which include the discomfort associated with, and considerable effort required for, moving the chair.

This problem has been resolved in electric, or motorized chairs; however this solution also presents a series of problems due to the great weight as well as high cost of electric wheelchairs, and a functional dependence on the battery that feeds the motor, which must be periodically recharged and whose complete discharge can occur at the most unexpected and inopportune moments.

In order to eliminate this problem, the patent GB 2208432 describes and offers a mechanism designed to propel wheelchairs by the armrests which, acting in association with connecting rods and transmission mechanisms for its wheels, are manually activated in a basculating motion. Although this solution fulfills the function for which it was designed, it presents the problem that the body movements required of the user to make the basculating or angular movement necessary over the arm supports is extremely uncomfortable, requiring a continuous movement of the back with the consequent negative repercussions.

### Brief Summary of the Invention

The wheelchair disclosed herein is one in which the user generates the force necessary to move the chair, resolving in a completely satisfactory way the problems described above and allowing a great ease of movement with minimum effort and in optimum comfort for the user.

The disclosed chair is constructed over the basic structure of a conventional, manually-activated chair, in which the chair has a pair of large diameter wheels in the rear which act as the driving wheels and a pair of considerably smaller diameter front wheels which act as the guide wheels. One of the essential characteristics of the present inventive chair is the fact that its armrests slide in a side-rear direction over the respective guides; the armrests are provided with the respective slides, so that they move in alternating longitudinal movements over a pair of pinions mounted over a common axle. In this way, one pinion acts in a determined direction of movement of the armrests and does not operate in the opposite direction, while the other pinion works inversely, thus using the forward as well as the reverse movement of each armrest to transmit a turning movement in the same direction over the axle over which the pinions are mounted. A corona is also used as a cleat, allowing the movement to at least one pinion established in the corresponding rear and driving wheel of the chair.

In this way, the arms move in a comfortable alternating movement which is transmitted to the mobile arm supports in a longitudinal sense and in a turning sense to the rear wheels of the chair, so that the back of the user can be perfectly supported by the back of the chair while making said movement, and the user is not required to use or move his back in order to move the chair.

Another characteristic of the invention is that more than one notched or indented corona can be established over said axle and more than one pinion over the wheel, so that with the collaboration of a conventional mechanism used to change gears, such as for example those used in determined bicycles, transmission of movement can be varied through a handle located over each of the mobile arm supports, with a wide range of possibilities available according to whether the chair is moving over a horizontal surface or any type of slope.

According to another of the characteristics of the invention this same handle is designed to act over a disc brake that is coupled to the axle of the rear driving wheels, in order to stop the chair as well as to control the direction of its movement.

### Brief Description of the Drawings

To complement the description made and in order to help to better comprehend the characteristics of the invention, according to an example for a practical use of same, attached to this description and included as a part thereof is a set of drawings, provided simply for illustration and representing the following, among other things:

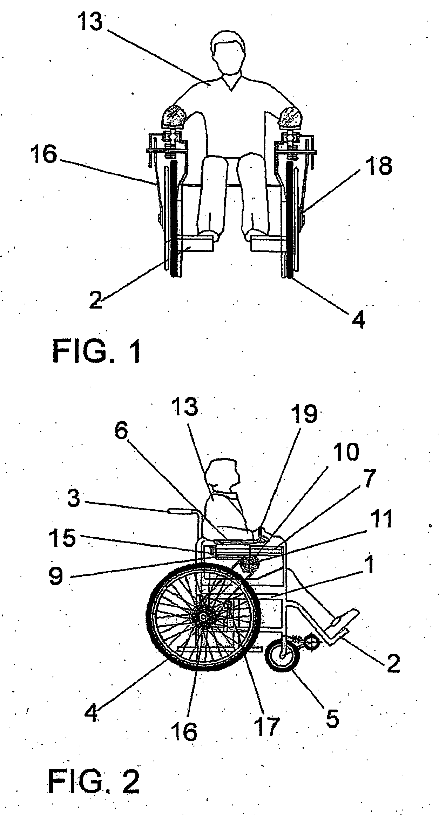

Figure 1. A schematic representation with a front view showing a wheel chair of the present invention, showing cross-sectional view of the armrests, and more specifically at the level of the transmission axles.
Figure 2. Another schematic representation of the first figure, now from a side view.
Figure 3. An amplified detail of one of the armrests of Figure 2 of.
Figure 4. Finally, a transverse view of the detail of the above figure.

### Detailed Description of the Invention

From the figures provided one can see how the wheelchair proposed in the invention is constituted from a conventional chair of this type, with a frame 1 that defines the chair itself, with a lower-front foot rest 2 and the classic rear handles 3 allowing it to be pushed by a third party; said frame 1 rests on a pair of rear driving wheels 4 with a large diameter, and a pair of front wheels 5 with a considerably smaller diameter which are self-guiding, which act as means of directing the chair as it moves.

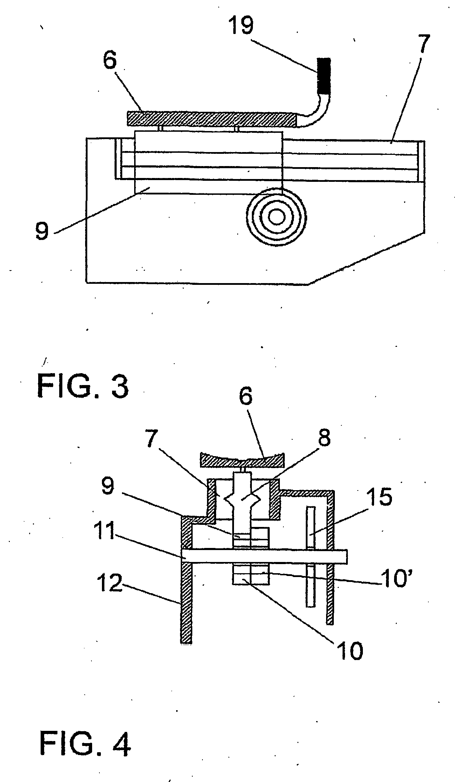

From this conventional basic structure, the proposed chair incorporates, at the top of the frame 1, lateral armrests 6, adequately cushioned to provide due comfort, which present the unique quality of being moveable, specifically moving in a front-back direction over the respective guides 7 as can be specially seen in Figures 3 and 4. For this effect each armrest 6 is joined to a support 8 which is coupled by tongue and groove to the corresponding guide 7, with a rack 9 incorporated in the inferior edge of said support 8, moveable in a longitudinal direction and in conjunction with the armrest 6.

The rack 9 engages with a pinion 10 which is mounted over a transverse axle 11, which in turn is mounted, with free turn, over a housing 12 that covers all of these mechanisms, except for the armrests 6. The pinion 10 is a kind that can be coupled to the axle 11 in a way that causes the axle 11 to turn when the pinion 10 is turned in a determined direction, and is thus free to turn without drag, in a contrary direction.

Over the axle 11 and fixed to the pinion 10 is a second pinion 10' with a contrary movement; that is, it drags against the axle 11 when the rack 9 moves in the opposite direction to the direction in which it moves when drag is produced through the pinion 10, so that both the forward movement of the armrests 6 as well as the backward movement of said armrests 6, caused by the user 13, brings about the axle 11 to turn, but always in the same direction.

As a complement to the structure described at least one indented corona 15 is also keyed to the axle 11, allowing various coronas of different diameters, so that said corona 15 transmits the movement to the rear driving wheel 4 of the chair through a chain 16 with a tensioner 17, and with a set of secondary pinions 18 of different diameters so that with the collaboration of the tensioner 17 and using a handle 19 associated to the armrest 6 the gears can be changed, similar to that of a bicycle, using the corona 15 and the pinion 18 that is most appropriate to each case.This transmission system can be substituted by a system of belts and pulleys. The lever 19 also acts as means of activating a disc brake on each of the rear driving wheels 4.

According to this structure the user 13 moves the chair with his hands; however, instead of doing so by directly turning the rear wheels 4 of the chair, this is done by applying a longitudinal forward and back movement of the handles 19; that is, by using the arms in a movement that is much more comfortable as well as much more effective, thus regulating at will the transmission to said wheels and simultaneously acting on the direction of the chair, and doing so while the user's back remains perfectly supported at all times by the chair back with no need to flex or bend while moving the armrests 6.

The chair can also include a battery that uses, for example the energy generated when the chair moves over a descending slope, using this energy to facilitate the movement of the chair when passing over surface with adverse conditions.

## Claims

1. Wheel chair, of the type constituted by a frame (1) with lower front foot rest (2) and handles (3) behind to allow manual pushing by another person, as well as a pair of large diameter wheels in the rear which act as driving wheels (4), and another pair of smaller diameter wheels in front which act as guide wheels (5), said wheel chair **characterized in that** it comprises
a first lateral armrest and a second lateral armrest (6) over the frame which are mobile, and can be moved in a longitudinal direction over respective guides (7), each of which guides (7) is provided with a lower rack (9) which, through the longitudinal movement of said racks (9) and a set of primary pinions (10,10') transmit movement to a transverse axle (11) provided with a corona (15) which through a chain (16) supplies movement to at least on secondary pinion (18) mounted over the axle of one of the rear driving wheels (4), so that the alternating front and back movement of each armrest (6) determines a turning movement in the same direction for each of the rear driving wheels (4)

2. Wheelchair, according to claim 1, **characterized in that** the first and second lateral armrests (6) are each attached to a first and second support (8) which can be moved over the first guide and second guide (7), respectively with the respective rack (9) incorporated in the bottom edge of a first lateral armrest and a second support (8), so that each rack (9) engages with one set of the primary pinions (10,10'), one primary pinion (10) having a drag with the axle (11) and the other pinion (10') having a drag contrary to the axle, so that while one of the primary pinions (10) drags the axle (11) in the same direction of movement as the armrests (6), the other primary pinion (10') turns with respect to the axle (11) and vice versa.

3. Wheelchair, according to claim 2, **characterized in that** the axle (11) having two ends is mounted transversally on a housing (12), where each end extends through said housing (12), and through the center of each rear wheel, and the wheelchair further comprises a plurality of indented coronas (15) mounted on the axle (11), and a first and second set of secondary pinions (18) mounted over each end of the axle extending through the rear driving wheels (4), such that each set of secondary pinions (18), in collaboration with a tensioner (17) and a first handle and a second handle (19) mounted on the first and second armrest (6) respectively can change gears to move the rear driving wheels (4).

4. Wheelchair, according to claim 3, **characterized in that** the handles (19) can be used as a grip for providing longitudinal and alternating movements of the armrests (6), and which act as activation means for a disc brake established on the rear driving wheels (4).

## Patentansprüche

1. Rollstuhl, vom Typ bestehend aus einem Rahmen (1) mit einer unteren vorderen Fußstütze (2) und Haltegriffe (3) hinten, um das manuelle Schieben durch eine andere Person zu ermöglichen, sowie ein Paar von Rädern mit großem Durchmesser im hinteren Teil, welche als Antriebsräder (4) dienen, und ein anderes Paar von Rädern mit kleinerem Durchmesser vorne, welche als Führungsrollen dienen (5), wobei der besagte Rollstuhl **dadurch gekennzeichnet ist, dass** es folgendes umfasst:
eine erste seitliche Armlehne und eine zweite seitliche Armlehne (6) über den Rahmen, welche beweglich sind, und die in eine Längsrichtung über die jeweiligen Führungen (7) bewegt werden können, wobei jede dieser Führungen (7) mit einem unteren Gestell (9) vorgesehen ist, welche durch die Längsbewegung dieser Gestelle (9) und eine Reihe von primären Zahnrädern (10, 10`) die Bewegung zu einer Querachse (11) übertragen, mit einem Kranz (15) versehen, welches durch eine Kette (16) die Bewegung mindestens zu einem sekundären Zahnrad (18) liefert, über der Achse eines der hinteren Antriebsräder (4) montiert, so dass die abwechselnde Bewegung nach vorne und nach hinten jeder Armlehne (6) eine Drehbewegung in der gleichen Richtung für jedes der hinteren Antriebsräder (4) bestimmt.

2. Rollstuhl nach Anspruch 1, **dadurch gekennzeichnet, dass** die ersten und zweiten seitlichen Armlehnen (6) jeweils mit einem ersten und zweiten Träger (8) verbunden sind, welche über die erste Führung und zweite Führung (7) jeweils bewegt werden können, mit dem jeweiligen Gestell (9) in der unteren Kante des ersten und zweiten Trägers (8) aufgenommen, so dass jedes Gestell (9) mit einer Reihe primären Zahnrädern (10, 10') eingreift, wobei ein primäres Zahnrad (10) ein Schleppen mit der Achse (11) und das andere Zahnrad (10') ein Schleppen gegen die Achse aufweist, so dass, während eines der primären Zahnräder (10) die Achse (11) in die gleiche Bewegungsrichtung wie die Armlehnen (6) schleppt, das andere primäre Zahnrad (10') sich in Bezug auf die Achse (11) dreht und umgekehrt.

3. Rollstuhl nach Anspruch 2, **dadurch gekennzeichnet, dass** die Achse (11), welche zwei Enden aufweist, quer auf einem Gehäuse (12) angebracht ist, wo sich jedes Ende durch besagtes Gehäuse (12) und durch die Mitte jedes Hinterrades erstreckt, und der Rollstuhl weiterhin auch eine Vielzahl von profilierten Kränzen (15) umfasst, die auf der Achse (11) montiert sind, und eine erste und zweite Reihe von sekundären Zahnrädern (18), über jedem Ende der Achse montiert, die sich durch die hinteren Antriebsräder (4) erstreckt, so dass jede Reihe von sekundären Zahnrädern (18), unter Mitwirkung einer Spannvorrichtung (17) und ein erster Haltegriff und ein zweiter Haltegriff (19), die an der ersten und zweiten Armlehne (6) jeweils angebaut sind, die Gänge wechseln können, um die hinteren Antriebsräder (4) zu bewegen.

4. Rollstuhl nach Anspruch 3, **dadurch gekennzeichnet, dass** die Haltegriffe (19) als Griff für die Längs- und Hin-und-Her-Bewegungen der Armlehnen (6) verwendet werden können und die als ein Betätigungsmittel für eine Scheibenbremse, auf den hinteren Antriebsrädern (4) eingerichtet, wirksam sind.

## Revendications

1. Fauteuil roulant, du type constitué par un châssis (1) avec un repose-pieds (2) frontal plus bas et des poignées (3) derrière pour permettre qu'une autre personne puisse le pousser manuellement, ainsi qu'une paire de roues de grand diamètre dans la partie postérieure, agissant comme des roues motrices (4), et une autre paire de roues avec un diamètre plus petit dans la partie frontale, agissant comme des roues directrices (5), ledit fauteuil roulant étant **caractérisé en ce qu'**il comprend
un premier appui-bras latéral et un deuxième appui-bras latéral (6) sur le châssis qui sont mobiles, et peuvent être déplacés dans une direction longitudinale sur leurs guides (7) respectifs, chacun desdits guides (7) est muni d'une crémaillère (9) inférieure, laquelle à travers du mouvement longitudinal desdites crémaillères (9) et un ensemble de pignons primaires (10,10') transmet un mouvement à un essieu transversal (11) muni d'une couronne (15) à travers de laquelle une chaîne (16) imprime du mouvement à au moins un pignon secondaire (18), monté sur l'essieu d'une des roues motrices postérieures (4), de manière à ce que l'alternance d'un mouvement d'avant en arrière de chaque appui-bras (6) détermine un mouvement de rotation dans la même direction pour chacune des roues motrices postérieures (4).

2. Fauteuil roulant, selon la revendication 1, **caractérisé en ce que** le premier et le deuxième appuis-bras latéraux (6) sont chacun attachés à un premier et un deuxième supports (8), qui peuvent être déplacés sur le premier guide et le deuxième guide (7) respectivement, avec la crémaillère (9) respective, incorporée sur le bord inférieur d'un premier et d'un deuxième supports (8), de manière à ce que chaque crémaillère (9) engage avec un ensemble de pignons primaires (10, 10'), dont l'entraînement d'un pignon primaire (10) est dans le sens de l'essieu (11) et dont l'entraînement d'un autre pignon (10') est en sens contraire à l'essieu, de manière à ce que quand un des pignons primaires (10) entraîne l'essieu (11) dans la même direction de mouvement que les appuis-bras (6), l'autre pignon primaire (10') tourne par rapport à l'essieu (11) et vice versa.

3. Fauteuil roulant, selon la revendication 2, **caractérisé en ce que** l'essieu (11) qui a deux extrémités, est monté transversalement sur un logement (12), dans lequel chaque extrémité s'étend à travers dudit logement (12) et à travers du centre de chaque roue postérieure, et le fauteuil roulant comprend également une pluralité de couronnes dentées (15) montées sur l'essieu (11), et un premier et un deuxième ensemble de pignons secondaires (18), montés sur chaque extrémité de l'essieu qui s'étend à travers des roues motrices postérieures (4), de manière à ce que chaque ensemble de pignons secondaires (18), en collaboration avec un tendeur (17) et une première poignée et une deuxième poignée (19) montées sur le premier et le deuxième appuis-bras (6), respectivement, puisse changer d'engrenage pour bouger les roues motrices postérieures (4).

4. Fauteuil roulant, selon la revendication 3, **caractérisé en ce que** les poignées (19) peuvent être utilisées pour offrir une prise afin de fournir des mouvements longitudinaux et alternatifs des appuis-bras (6), et qui agissent comme des moyens de déclenchement pour un frein à disque installé sur la partie postérieure des roues motrices (4).
